# EUROPEAN PATENT APPLICATION

(11) **EP 4 485 592 A1**
(43) Date of publication of application: **01.01.2025**
(21) Application number: 23182527.4
(22) Date of filing: 29.06.2023
(51) Int. Cl.: H01M 10/04, H01M 50/107, H01M 50/474, H01M 50/477, H01M 50/538, H01M 50/548, H01M 50/552, H01M 50/56, H01M 50/566

(54) **BATTERY CELL, VEHICLE AND METHOD FOR MANUFACTURING A BATTERY CELL**

(71) Applicant: Volvo Car Corporation, 405 31 Göteborg (SE)
(72) Inventor: KARLSSON, Daniel, 40531 Göteborg (SE); WALLBORG, Martin Hjälm, 40531 Göteborg (SE); PERSSON, Klas, 40531 Göteborg (SE)
(74) Representative: Maiwald GmbH

(57) **Abstract**

The disclosure relates to a battery cell (10) comprising a housing (20) having a wall (22) and at least one battery terminal (30, 40), the battery cell (10) comprising an electrode material (50) having electrode tabs (51), at least a portion of the electrode material (50) extending along the wall (22) inside the housing (20), the electrode tabs (51) being electrically connected to the at least one battery terminal (30, 40), and the battery cell (10) further comprising a deflection structure (80) configured to deflect at least some of the electrode tabs (51) away from the wall (22). The disclosure further relates to a vehicle comprising a battery unit, the battery unit having at least one of such battery cells (10). The disclosure further relates to a method (100) for manufacturing a battery cell (10).

## Description

### TECHNICAL FIELD

The present disclosure relates to a battery cell, a vehicle, and a method for manufacturing a battery cell.

### BACKGROUND ART

Battery electric vehicles (BEV) run on stored electricity in battery cells configured in various setups to a vehicle, e.g., modules, cell to pack, or cell to body. Once the charge is depleted, the battery cells must be recharged. Many vehicle owners and driver want to get from their destination as quickly as possible and value a short recharge stop in order to get back on the road and reach their destination quickly.

Refueling a gas-powered car is a simple matter, consisting of inserting a fuel handle and nozzle into a vehicle refueling pipe. A subsequent pump action will transfer said gas and fill up a regular-sized car tank in one or two minutes. Little to no energy losses occur during the liquid transfer process, except for running the electrical pump to move said gas. Moving the gas itself through piping can be considered a lossless process for all intents and purposes.

Recharging a battery electric vehicle is fundamentally different as the process involves moving electrons (i.e., current) compared to moving stored chemical energy in the form of a combustible liquid. Transfer losses increase substantially when moving high current through wires as losses relates, and scales with, electrical resistance in the wire. This phenomenon is unique to BEVs and has no equivalence in a legacy internal combustion car. Therefore, recharging a BEV requires careful design consideration and mitigating system choices of multiple parameters related to, e.g., resistance heat losses, cooling power, cell electrolyte temperature and possible degradation, all while aiming to deliver a fast-charging experience capable of matching an internal combustion engine vehicle.

Beside all the technical design and system challenges related to recharging a BEV, the production of battery cells is a very complex manufacturing process. Specifically, the battery cells shall be manufactured with high energy density per weight for most applications, such as vehicles. Accordingly, the manufacturing process is complex and involves many different manufacturing steps. For example, fully automated, the manufcaturing requires large investment sums to procure and fine tune the production equipment to reach the required quality, yield and cost targets. Small process improvements such as time reduction or integration of two or more process steps into one quickly amounts to large savings, increased profitability, and throughput.

### SUMMARY

The above problem is at least partially solved or alleviated by the subject matter of the independent claims of the present disclosure, wherein further examples are incorporated in the dependent claims.

According to a first aspect of this disclosure, there is provided a battery cell comprising a housing having a wall and at least one battery terminal. The battery cell comprises an electrode material having electrode tabs, at least a portion of the electrode material extending along the wall inside the housing. The electrode tabs are electrically connected to the at least one battery terminal. The battery cell further comprises a deflection structure configured to deflect at least some of the electrode tabs away from the wall.

By means of the deflection structure deflecting at least some of the electrode tabs away from the wall, an advantageous deflection of the tabs does need not to be done prior to insertion of the electrode material having the electrode tabs into the housing when assembling the battery cell. The deflection structure may accordingly be understood as a built-in feature of every battery cell, which provides the advantageous tab deflection when the battery cell is assembled. This saves an otherwise time-consuming manufacturing step and any for this purpose required machinery or tools in the respective manufacturing step. This in turn saves costs for the manufacturing of battery cells. Considering how many battery cells are used in different applications, in particular in vehicles, these cost savings add up and become significant.

The deflection structure being configured to deflect the electrode tabs away from the wall may mean that the deflection structure is arranged and/or designed such that at least some of the electrode tabs of the electrode material are deflected away from the wall. In particular, the electrode tabs may be deflected away from the portion of the electrode material, specifically a first portion extending along the wall and/or parallel to the wall, in its direction of extension. The deflection of the electrode tabs by means of the deflection structure may be a one-time effect and/or a permanent effect, for example. A one-time effect may be achieved during manufacturing or assembly of the battery cell, when the electrode material with the electrode tabs is inserted into the housing. In this case, the electrode tabs may be deflected, in particular bend with respect to the first portion of the electrode material. The electrode tabs may then stay bent. A permanent effect may be when the deflection structure is applying a force to at least some of the electrode tabs even after manufacturing and thus keeping the bent up.

The deflection structure being configured to deflect at least some of the electrode tabs away from the wall may alternatively be phrased as the deflection structure by means of which at least some of the electrode tabs are deflection away from the wall. At least some of the electrode tabs being deflect away from the wall may comprise most or all of the electrode tabs.

In particular, the electrode tabs may be deflected such that at least some, most or substantially all of the electrode tabs are getting in contact, in particular electrical contact by means of physical contact, with each other. This facilitates an electrical contact between the respective electrode tabs to improve the electrical conductivity from the electrode tabs to the battery terminal.

The deflection structure and/or the electrode material may be configured to bend at least some of the electrode tabs. This means that the electrode material is bent, in particular along a line running perpendicular to a direction of extension of the electrode material along the wall. Such bending line may run in between the tab portion and another portion of the electrode material. The other portion may be referred to herein as a first portion, whereas the tab portion may be referred to herein as a second portion for distinguishing between the two portions. The bent of the electrode material may have a bending angle, which may be provided by means of the deflection structure, in particular its configuration, e.g., size, orientation, etc.

The battery cell may in particular comprise two battery terminals, specifically a first battery terminal and a second battery terminal. The first battery terminal may be connected to the electrode tabs. The battery cell may further comprise at least one, in particular, two electrode materials, specifically a first electrode material and a second electrode material. The electrode material having the electrode tabs may be referred to herein as the first electrode material. The battery cell may further comprise a separator material, which may be provided between the two electrode materials. The electrode materials and the separator material may be part of an electrode assembly inside the housing, which may be of a jelly roll type, for example.

The electrode tabs may be part of one of the electrode materials. In particular, the electrode tabs may be disposed at or form an end of the electrode material. The electrode material may have a first portion and a second portion, e.g., as described above. The first portion may be a different portion than the second portion, which may have the electrode tabs. The first portion and/or the second portion may at least partially extend along the wall of the housing. The direction of extension, in particular longitudinal extension, of the first portion may be parallel to the wall, for example. The deflection may be such that the direction of extension, in particular longitudinal extension, of the first portion of the electrode material and the second portion of the electrode material are different from one another. In particular, the second portion may extend away from the wall along its (longitudinal extension). In particular, there may be a bent between these two portions provided by the deflection of the deflection structure, e.g., following the above-mentioned bending line. Also, or in other words, there may be an angle between the directions of extensions of these two portions.

In an example, the housing may comprise at least part of the deflection structure. In particular, the housing may comprise most or all of the deflection structure. Also, the housing and the deflection structure may be designed as a one-piece part or integrally with one another. Such incorporation of the deflection structure into the housing simplifies the provision of the deflection process in the manufacturing process of the battery cell.

In an example, the deflection structure may be at least partially formed by a wall portion of the wall. This wall portion may be an interior wall portion or an interior and exterior wall portion. For an interior wall portion, the wall portion which at least in part forms the deflection structure, may be provided in the interior of the housing or inside of the housing only. For the variant of the interior and exterior wall portion, the deflection structure is both, provided interior and exterior of the housing. Forming the deflection structure at least in part, which may mean for the most part or entirely, by the wall portion of the wall, allows for a simple and cost-effective design of the housing with incorporation of the deflection structure.

In an example, the wall portion may be a chamfered portion of the wall. The chamfered portion may be visible from outside of the housing. Chamfering the wall allows for a particularly simple and cost-effective design of the housing with incorporation of the deflection structure. Because the chamfered portion may be limited in size to the longitudinal extension and/or location of the electrode tabs, the chamfering does not negatively limit the interior volume of the battery cell and thereby the battery capacity of the battery cell generally correlating to the size of the electrode assembly.

In an example, the wall portion at least partially forming the deflection structure may be arranged at one of two opposite end portions of the housing. The opposite end portions may be located longitudinal ends of the housing. By arranging the wall portion forming at least partially the deflection structure, the interior volume of the battery cell is not negatively affected by the deflection structure. Also, it may be ensured that the electrode material is only deflected, in particular bend, where required, e.g., at its end, in particular corresponding to the electrode tab portion mentioned above.

In an example, at least some of the electrode tabs may be overlapping each other. In particular, electrode tabs, in particular most electrode tabs, may be overlapping other electrode tabs. In particular, a flower-like pattern of the electrode tabs may be provided by the deflection structure, in particular when the housing is of cylindrical shape. The flower-like pattern may appear when viewed from below, i.e., the end of the housing. By means of the overlap of respective electrode tabs, the electrode tabs are being electrically connected with one another through direct contact. Thereby, the electrical conductivity for charging via the respective battery terminal is significantly increased.

In an example, the housing may be cylindrically shaped. Also, the housing may have an electrode assembly, the electrode assembly comprising the electrode tabs and being of a jelly roll type. Such design of a housing and electrode assembly is a non-limiting advantageous example. Alternatively, the housing may be of a rectangular shape, for example.

In an example, at least part of the housing may be configured as the at least one battery terminal. Specifically, at least an end portion or plate of the housing may be configured as the at least one battery terminal. Also, most or all of the housing may be configured as the at least one battery terminal. This end portion or plate may be in electrical contact with the electrode tabs of the electrode material. For example, the entire housing may serve as a battery terminal, in particular a negative battery terminal.

In an example, the housing may comprise a bridging material structurally connecting the electrode tabs with the at least one battery terminal. The bridging material may accordingly at least provide structural support for the deflected, in particular bend, electrode tabs with respect to the battery terminal.

In an example, the bridging material may be thermally and/or electrically conductive. This may allow for thermally conducting away heat from the electrode tabs via the bridging material to the battery terminal, in particular the housing. Also, or alternatively, this may allow for conducting current through the bridging material, effectively improving the electrical properties between the battery terminal and the electrode tabs. Specifically, internal electrical resistances between the electrode tabs, in particular due to their deflected shape, and the battery terminal may be significantly reduced by a thermally and/or electrically conductive bridging material. While the connection between the electrode tabs and the battery terminal may typically be a bottleneck for charging, specifically fast charging, this problem may be overcome with the bridging material as proposed herein.

In an example, the bridging material may be a paste and/or an adhesive. The viscosity of a paste or adhesive has the advantage that the bridging material is somewhat flexible for the electrode tabs to be enclosed by the bridging material for better conductive properties. As an adhesive, the bridging material may provide further strengthen the structural properties. The adhesive may harden or, in other words, become solid once the electrode tabs are enclosed thereby, which strengthens the structure and may ensure that an electrolyte, which may be of a liquid type, in the battery cell does not get mixed up with the bridging material.

By means of the bridging material as proposed herein, which provides for an improved electrode tab to battery terminal design, it is possible to solve the problem of limited charging current due to the fallbacks as described in the introductory part of this description. The bridging material allows higher currents and better heat removal from the electrode assembly inside the battery cell. This may decrease the required cooling power and even allow for a downsized cooling system of a battery unit comprising the battery cells as disclosed herein. Accordingly, further benefits such as lowered vehicle cost and weight may be achieved by means of the battery cell as disclosed herein.

In an example, another electrode material and/or a separator material inside the housing may be spaced apart from the bridging material. Thereby, the other electrode material and/or the separator material may be electrically separated from the electrode material having the electrode tabs, to prevent short-circuiting.

According to a second aspect, there is provided a vehicle comprising a battery unit, the battery unit having at least one battery cell according to the first aspect of this disclosure.

The vehicle may be of any type, such as a hybrid electric vehicle or a battery electric vehicle, for example. The battery unit may be of any type, such as a traction battery unit, for example.

According to a third aspect of this disclosure, there is provided a method for manufacturing a battery cell, the method comprising:
- providing a housing having a wall and at least one battery terminal,
- providing at least one electrode material having electrode tabs for electrical connection to the at least one battery terminal,
- inserting the at least one electrode material into the housing such that at least a portion of the electrode material extends along the wall inside the housing and a deflection structure of the battery cell, in particular the housing, is deflecting, in particular bending, at least some of the electrode tabs away from the wall.

In an example, the method may comprise further steps such as providing a bridging material in the housing, in particular directly at the battery terminal, and further in particular prior to insertion of the at least one electrode material into the housing.

In an example, the electrode material may be inserted into the housing as or with a full electrode assembly, which may have a further electrode material and separator material, as herein described, and which may be of a jelly roll type, for example.

In an example, the method may further comprise heating of a first end of the housing, the first end being where the electrode tabs, and in particular the battery terminal, are located at, to join the electrode tabs to the at least one battery terminal. Any joining method including the provision of heat may be used, such as, but not limited to, brazing, for example. Accordingly, the inner side of the first end of the housing may be coated with a pre-flux, such as tin, for example. By applying the heat to the first end, a connection between the first end, which may be a bottom plate or side of the housing, and the electrode tabs may be formed.

It is noted that the above aspects, examples and features may be combined with each other irrespective of the aspect involved.

The above and other aspects of the present disclosure will become apparent from and elucidated with reference to the examples described hereinafter.

### BRIEF DESCRIPTION OF DRAWINGS

Examples of the disclosure will be described in the following with reference to the following drawings illustrating:
- Fig. 1: a cross-sectional view of a battery cell according to the prior art;
- Fig. 2: a cross-sectional view of a battery cell according to this disclosure;
- Fig. 3: another cross-sectional view of a battery cell according to this disclosure;
- Fig. 4: the battery cell of Fig. 3 including details of the electrode assembly according to this disclosure;
- Fig. 5: the battery cell of Fig. 3 further including a bridging material according to this disclosure; and
- Fig. 6: a method for manufacturing the battery cell of Fig. 5.

### DETAILED DESCRIPTION

The figures are merely schematic representations and serve only to illustrate examples of the disclosure. Identical or equivalent elements are in principle provided with the same reference signs.

The designation of elements and steps as first, second, etc. as provided herein is merely intended to make the elements and steps referenceable and distinguishable from one another. By no means does the designation of elements and steps constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of elements or steps in a certain order is merely intended to facilitate one example of this disclosure and by no means constitutes a limitation of the scope of this disclosure. Generally, unless no explicitly required order is being mentioned, the steps may be carried out in any feasible order.

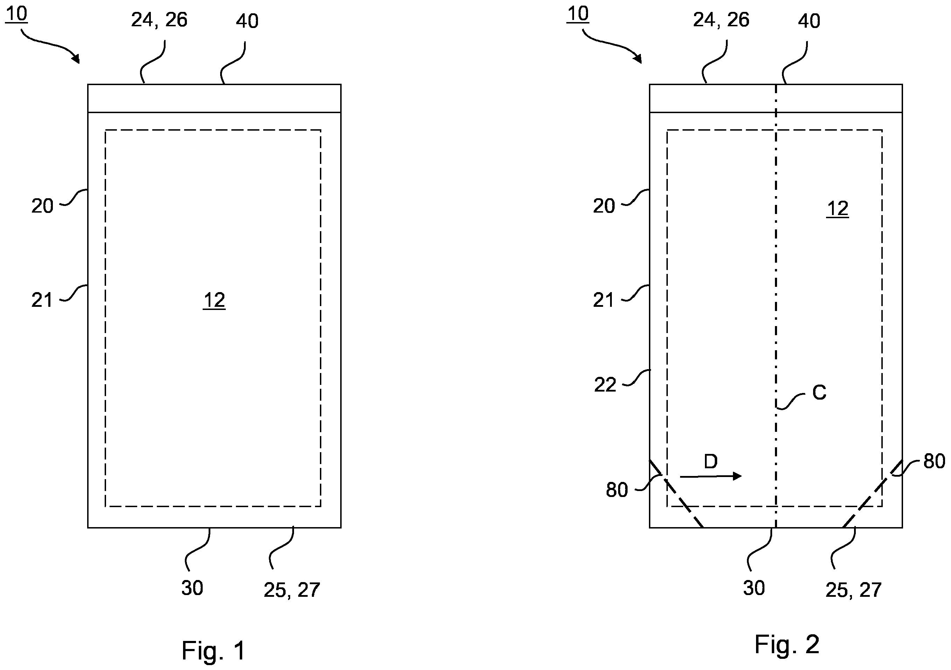

Figure 1 illustrates a battery cell 10 according to the prior art and as a cross-sectional view through the battery cell 10. The battery cell 10 comprises a housing 20, which is of a cylindrical type in this example. The housing 20 is essentially formed by a cylindrical or container portion 21, a second end portion 24 and a first end portion 26. The housing has a first end 27 at the first end portion 25, which may be designed as a lid or plate, for example, and a second end 26 at the second end portion 24, which may be designed as a lid or plate, for example. A first battery terminal 30 of the battery cell 10 is provided at the first end 27 and a second battery terminal 40 is provided at the second end 26.

The battery cell 10 further comprises an electrode assembly 12. In the electrode assembly, there may be two electrode materials, which may be respectively connected to the battery terminals 30, 40.

To reduce the manufacturing steps required to manufacture a battery cell 10 of high electrical conductivity for better charging performance, the battery cells 10 as shown in Figures 2 to 5 are proposed.

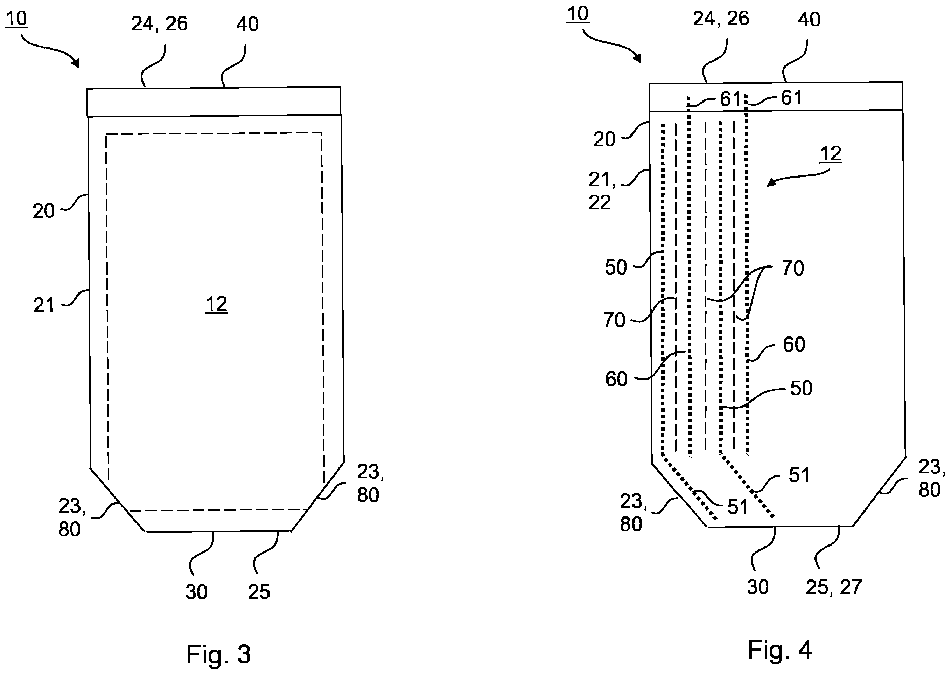

The battery cell 10 may be designed with some or all features described with reference to Fig. 1, for example. The battery cell 10 of Fig. 2 distinguishes at least from that of Fig. 1 in that the battery cell 10 comprises a deflection structure 80. The deflection structure 80 is configured to bend electrode material 50 of the electrode assembly 12 as will be described in more detail with reference to Fig. 4.

As shown in Fig. 2, the deflection structure 80 may be a separate structure inside of the housing 20 or it may be comprised by the housing 20, in particular integrally formed therewith. The deflection structure 80 may extend along part, most or substantially all or the entire perimeter of the interior side of the wall 22 and/or the cylindrical or container portion 21 of the housing 20. In the example of Fig. 2, the deflection structure 80 may be formed by a chamfering of an interior side of the wall 22 of the housing 20 or as a separate structure inserted into the housing 20 and located at its wall 22. Here, the wall 22 is disposed at the cylindrical or container portion 21 of the housing 20.

Figure 3 shows an alternative of the deflection structure 80, which is formed by a wall portion 23 of the wall 22 of the housing 20. The wall portion 23 or deflection structure 80 is specifically formed as a chamfered portion or chamfering of the wall 22. Compared to Fig. 2, the deflection structure 80 is provided on the interior and exterior of the housing 20, meaning that it may be seen interior and exterior of the housing 20.

In Figs. 2 and 3, the deflection structure 80 is arranged or located at the first end 25 of the battery cell 10, where the first battery terminal 30 is formed.

The first battery terminal 30 in Fig. 2 or 3 may be formed by the entire housing 20, whereas the second battery terminal 40 may be located at an opening on the second end portion 24 of the housing 20, for example.

Figure 4 shows how the deflection structure 80 of Fig. 3 affects the electrode assembly 12 inside of the battery cell 10. Here, the electrode assembly 12 is only shown partially for a part of the battery cell 10 and only as an illustrative example. Of course, the electrode assembly 12 may comprise much more layers of electrode material 50, 60 and separator material 70 than is shown in Fig. 4. Also, the bending of the electrode tabs 51 by means of the deflection structure 80 as further explained below is shown herein merely illustrative to explain the bending provided by the deflection structure 80.

As may be seen in Fig. 4, the two electrode materials 50, 60 extend with a first portion along the wall 22 of the cylindrical portion 21 of the housing 20 while being respectively separated by the separator material 70. An electrolyte, for example of a liquid type, may be provided in the housing 20.

To guide the electrode tabs 51, which may also be referred to as first electrode tabs 51, of the electrode material 51, which may also be referred to as a first electrode material 51, to the first battery terminal 30, the deflection structure 80 deflects, in particular bends, the electrode tabs 51 away from the wall 22 of the housing. Specifically, as shown in Fig. 2, the electrode tabs 51 are bend away in the shown deflection direction D away from the wall 22 towards a center C of the battery cell 10. Thereby, the electrode tabs 51 in a second portion of the electrode material 51 are bent away from the rest or first portion of the first electrode material 50 as may be seen in Fig. 4. As explained, the first electrode material 50 may be distinguished by two portions, namely a first portion extending in parallel along the wall 22 and a second portion having the electrode tabs 51 bent away from the first portion.

Fig. 4 is only illustrative in that it does not show how the electrode tabs 51 are bent in a way such that they overlap each other. The electrode tabs 51 may be deflected away from each other such that they get in direct contact with each other, in particular pushing themselves towards the center C and establishing electrical contact between each other. Thereby, a flower-like pattern of the electrode tabs 51 may be created at the first end portion 25 of the battery cell 10. The flower-like pattern allows for high electrical conductivity between the electrode tabs 51 and the first battery terminal 30.

Fig. 4 further shows the second electrode tabs 61 of the second electrode material 60, which may be similarly connected as the first electrode tabs 51 or in another way to the second battery terminal 40, which may be a positive battery terminal contrary to the first battery terminal 30 being a negative battery terminal.

To further increase the electrical conductivity of the connection between the electrode tabs 51 and the first battery terminal 30, a bridging material 90 is provided between the first battery terminal 30 at the first end portion 25 and the electrode tabs 51 contacting each other, in particular overlapping each other. The bridging material 90 is provided with a thickness T such that it does not contact the second electrode material 60 and the separator material 70. The bridging material 90 may be thermally and/or electrically conductive and be designed as a paste and/or an adhesive, for example.

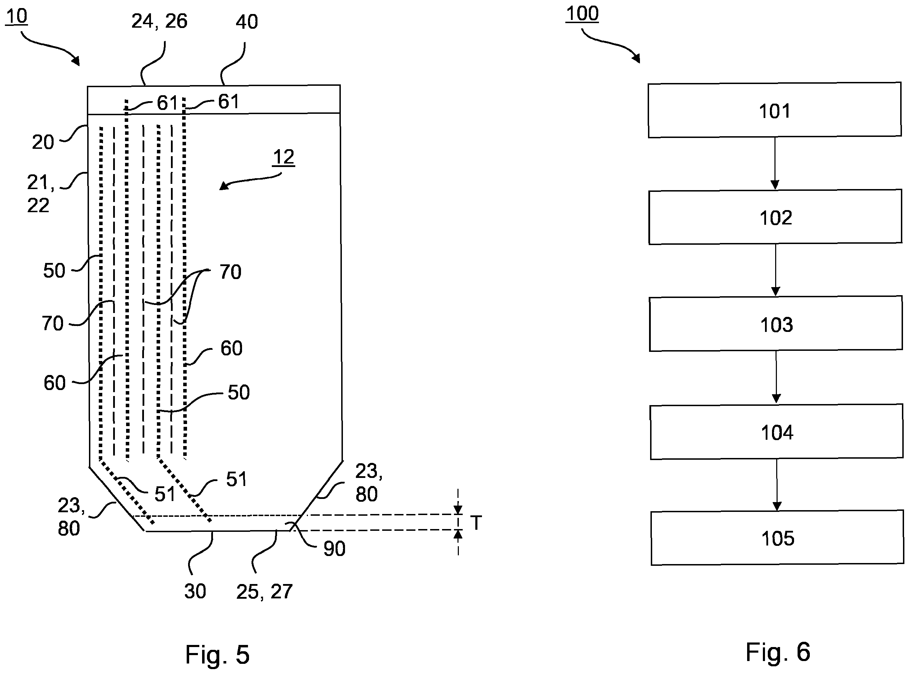

Figure 6 depicts steps of a method 100 for manufacturing a battery cell 10 as shown in Fig. 5.

In a first step 101 of method 100, a housing 20 having a wall 22 and the first battery terminal 30 is provided.

In a second step 102 of method 100, the electrode assembly 12 having the two electrode materials 50, 60, the electrode tabs 51, 61 and the separator material 70 is provided for insertion into the housing 20 when the second end portion 24 and/or the first end portion 25 is open, i.e., not closing the housing 20.

In a third step 103, the bridging material 90 is provided at the first end portion 25 of the housing 20.

In a third step 104 of method 100, the electrode assembly 12 is being inserted into the housing 20 such that the first portion of the electrode material 50 extends along the wall 22 inside the housing 20 and the deflection structure 80 of the housing 20 is bending at least some of the electrode tabs 51 away from the wall 22 such that they overlap each other, in particular in the flower-like pattern described above.

In a fifth step 105 of method 100, the housing 20 is closed. This may include brazing the first end portion 25 to join the electrode tabs 51 to the first battery terminal 30.

Other variations to the disclosed examples can be understood and effected by those skilled in the art in practicing the claimed disclosure, from the study of the drawings, the disclosure, and the appended claims. In the claims the word "comprising" or "having" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: battery cell
- 12: electrode assembly
- 20: housing
- 21: cylindrical portion
- 22: wall
- 23: wall portion
- 24: second end portion
- 25: first end portion
- 26: second end
- 27: first end
- 30: first battery terminal
- 40: second battery terminal
- 50: first electrode material
- 51: first electrode tab
- 60: second electrode material
- 61: second electrode tab
- 70: separator material
- 80: deflection structure
- 90: bridging material
- 100: method
- 101: first step
- 102: second step
- 103: third step
- 104: fourth step
- 105: fifth step

- C: center
- D: deflection direction
- T: thickness

## Claims

1. A battery cell (10) comprising a housing (20) having a wall (22) and at least one battery terminal (30, 40), the battery cell (10) comprising an electrode material (50) having electrode tabs (51), at least a portion of the electrode material (50) extending along the wall (22) inside the housing (20), the electrode tabs (51) being electrically connected to the at least one battery terminal (30, 40), and the battery cell (10) further comprising a deflection structure (80) configured to deflect at least some of the electrode tabs (51) away from the wall (22).

2. The battery cell (10) according to claim 1, the housing (20) comprising at least part of the deflection structure (80).

3. The battery cell (10) according to claim 1 or 2, the deflection structure (80) being at least partially formed by a wall portion (23) of the wall (22).

4. The battery cell (10) according to claim 3, the wall portion (23) being a chamfered portion of the wall (22).

5. The battery cell (10) according to claim 3 or 4, the wall portion (23) at least partially forming the deflection structure (80) being arranged at one of two opposite end portions (24, 25) of the housing (20).

6. The battery cell (10) according to any of the previous claims, at least some of the electrode tabs (51) overlapping each other.

7. The battery cell (10) according to any of the previous claims, the housing (20) being cylindrically shaped and the housing (20) having an electrode assembly (12), the electrode assembly (12) comprising the electrode tabs (51) and being of a jelly roll type.

8. The battery cell (10) according to any of the previous claims, at least part of the housing (20) being configured as the at least one battery terminal (30, 40).

9. The battery cell (10) according to any of the previous claims, the housing (20) comprising a bridging material (90) structurally connecting the electrode tabs (51) with the at least one battery terminal (30, 40).

10. The battery cell (10) according to claim 9, the bridging material (90) being thermally and/or electrically conductive.

11. The battery cell (10) according to any of claims 9 to 10, the bridging material (90) being a paste and/or an adhesive.

12. The battery cell (10) according to any of claims 9 to 11, another electrode material (60) and/or a separator material (70) inside the housing (20) being spaced apart from the bridging material (90).

13. A vehicle comprising a battery unit, the battery unit having at least one battery cell (10) according to any of the previous claims.

14. A method (100) for manufacturing a battery cell (10), the method (100) comprising:
- providing a housing (20) having a wall (22) and at least one battery terminal (30, 40),
- providing at least one electrode material (50) having electrode tabs (51) for electrical connection to the at least one battery terminal (30, 40),
- inserting the at least one electrode material (50) into the housing (20) such that at least a portion of the electrode material (50) extends along the wall (22) inside the housing (20) and a deflection structure (80) of the battery cell (10) is deflecting at least some of the electrode tabs (51) away from the wall (22).

15. The method (100) according to claim 14, the method (100) further comprising:
- heating of a first end portion (25) of the housing (20), the first end portion (25) being where the electrode tabs (51) are located at, to join the electrode tabs (51) to the at least one battery terminal (30, 40).

## Amended claims

### Amended claims in accordance with Rule 137(2) EPC.

1. A battery cell (10) comprising a housing (20) having a wall (22) and at least one battery terminal (30, 40), the battery cell (10) comprising an electrode material (50) having electrode tabs (51), at least a portion of the electrode material (50) extending along the wall (22) inside the housing (20), the electrode tabs (51) being electrically connected to the at least one battery terminal (30, 40), and the battery cell (10) further comprising a deflection structure (80) configured to deflect at least some of the electrode tabs (51) away from the wall (22), the housing (20) comprising a bridging material (90) structurally connecting the electrode tabs (51) with the at least one battery terminal (30, 40), the bridging material (90) being a paste and/or an adhesive.

2. The battery cell (10) according to claim 1, the housing (20) comprising at least part of the deflection structure (80).

3. The battery cell (10) according to claim 1 or 2, the deflection structure (80) being at least partially formed by a wall portion (23) of the wall (22).

4. The battery cell (10) according to claim 3, the wall portion (23) being a chamfered portion of the wall (22).

5. The battery cell (10) according to claim 3 or 4, the wall portion (23) at least partially forming the deflection structure (80) being arranged at one of two opposite end portions (24, 25) of the housing (20).

6. The battery cell (10) according to any of the previous claims, at least some of the electrode tabs (51) overlapping each other.

7. The battery cell (10) according to any of the previous claims, the housing (20) being cylindrically shaped and the housing (20) having an electrode assembly (12), the electrode assembly (12) comprising the electrode tabs (51) and being of a jelly roll type.

8. The battery cell (10) according to any of the previous claims, at least part of the housing (20) being configured as the at least one battery terminal (30, 40).

9. The battery cell (10) according to any one of the previous claims, the bridging material (90) being thermally and/or electrically conductive.

10. The battery cell (10) according to any one of the previous claims, another electrode material (60) and/or a separator material (70) inside the housing (20) being spaced apart from the bridging material (90).

11. A vehicle comprising a battery unit, the battery unit having at least one battery cell (10) according to any of the previous claims.

12. A method (100) for manufacturing a battery cell (10), the method (100) comprising:
- providing a housing (20) having a wall (22) and at least one battery terminal (30, 40),
- providing at least one electrode material (50) having electrode tabs (51) for electrical connection to the at least one battery terminal (30, 40),
- inserting the at least one electrode material (50) into the housing (20) such that at least a portion of the electrode material (50) extends along the wall (22) inside the housing (20) and a deflection structure (80) of the battery cell (10) is deflecting at least some of the electrode tabs (51) away from the wall (22), the housing (20) comprising a bridging material (90) structurally connecting the electrode tabs (51) with the at least one battery terminal (30, 40), the bridging material (90) being a paste and/or an adhesive.

13. The method (100) according to claim 12, the method (100) further comprising:
- heating of a first end portion (25) of the housing (20), the first end portion (25) being where the electrode tabs (51) are located at, to join the electrode tabs (51) to the at least one battery terminal (30, 40).
